# EUROPEAN PATENT APPLICATION

(11) **EP 4 752 015 A1**
(43) Date of publication of application: **03.06.2026**
(21) Application number: 24216512.4
(22) Date of filing: 29.11.2024
(51) Int. Cl.: B60T 11/18, F16B 17/00, F16C 7/00

(54) **PUSHROD**

(71) Applicant: Volvo Car Corporation, 405 31 Göteborg (SE)
(72) Inventor: KAPOCS, Marcel, 40531 Göteborg (SE); JOHNSSON, Ulrika, 40531 Göteborg (SE)
(74) Representative: Kransell & Wennborg KB

(57) **Abstract**

The disclosure relates to a pushrod (3) comprising a first pushrod component (1) and a second pushrod component (2), wherein a flexible plug element (121) of the first pushrod component (1) is non-reversibly engaged with a socket element (221) of the second pushrod component (2).

## Description

### TECHNICAL FIELD

The present invention relates to pushrod components, a set of pushrod components, a pushrod, and a vehicle.

### BACKGROUND

A pushrod is a rod often made of metal and used for transmitting a motion in operating a vehicle. In the vehicle, the pushrod can be used in various parts, such as engines and brakes. In a braking system of the vehicle, a function of the pushrod is to transfer torque or force exerted on a brake pedal to a cylinder of a brake unit. More specifically, if the brake pedal is pressed by a driver, the brake pedal pushes against the pushrod, which then transmits the force or the torque applied on the pushrod to a piston inside the cylinder. In this way, the brake pedal and the brake unit can be located apart from each other.

Often, the pushrod has an inner part and an outer part which together form the pushrod. The inner part and the outer part can be engaged by a threaded interface. Since the inner part and the outer part may be manufactured by different original equipment manufacturers, OEMs, and used for different brake pedals and brake units, it is important that the inner part and the outer part can be engaged with one another. Therefore, although the outer part is OEM unique and may have different length and thickness for different usages, an interface of the outer part normally has the same configuration that would fit with most of inner parts of the pushrod. Similarly, the inner part commonly has an interface that fits the interface of most of outer parts of the pushrod. The threaded interfaces of the inner part and the outer part are commonly engaged as screw j oints.

However, having screw joint interfaces may not be sturdy and can be prone to becoming loose. If any part of the pushrod is manufactured imprecisely, the pushrod may become loose and not be able to transmit the force or the torque properly. Consequently, there is a risk that the connection between the brake pedal and the brake unit becomes unstable.

### DISCLOSURE OF THE INVENTION

The present invention is made to solve the above identified problem. The problem is at least partially solved or alleviated by the subject-matter of independent claims. Preferred examples are given by the subject-matter of dependent claims. Further examples are given to facilitate the understanding of the invention.

According to a first aspect, there is provided a first pushrod component comprising an elongated body with a first end portion and a second end portion opposite to the first end portion, wherein the first end portion comprises a ball joint connectable to a brake unit, and the second end portion comprises a flexible plug element non-reversibly engageable with a socket element of a second pushrod component, wherein the flexible plug element is compressible under pressure and expandable to its original form when decompressed.

A pushrod may be a rod used for transmitting a force in a vehicle, e.g., from a brake pedal to a brake unit of a brake system. The pushrod may be made of metal but can also be made of any other materials appropriate for use, e.g. a plastic material. In the braking system of the vehicle, there may be a brake pedal which receives an input from a driver of the vehicle. This input from the driver may be understood as the force or the torque given to the brake pedal when the driver presses the brake pedal. An end of the pushrod is arranged at or connected to the brake pedal and can transfer the force or the torque applied to the brake pedal to the pushrod. The other end of the pushrod can be, for example, arranged at or connected to a brake unit. The brake unit can therefore receive the force or the torque applied to the brake pedal via the pushrod. The pushrod may be located between the brake pedal and the brake unit to deliver the torque applied to the brake pedal. It is noted that the braking system can be any braking system appropriate for using the pushrod. For example, the braking system may be a system with a mechanical brake, a hydraulic brake arrangement, a brake-by-wire system and/or a system with an electrical brake. It is further noted that the present invention is illustrated with an exemplary application of the pushrod in a braking system. However, the pushrod according to the present invention can also be applied to any other systems of the vehicle using a pushrod, such as an engine. Furthermore, the wordings "first" and "second" in the first pushrod component and the second pushrod component are used herein merely to distinguish the respective pushrod components from one another. The wording "component" may be a part of a larger structure. For example, the first pushrod component may be a part of the pushrod and the second pushrod component may be another part of the pushrod. In an example, the first pushrod component may be the inner part of the pushrod and the second pushrod component may be the outer part of the pushrod. Alternatively, the first pushrod component may be the outer part of the pushrod and the second pushrod component may be the inner part of the pushrod. The inner part of the pushrod may be a part of the pushrod arranged at or connected to the brake unit and the outer part of the pushrod may be a part of the pushrod arranged at or connected to the brake pedal.

The elongated body may be a body which is long in relation to width. The elongated body may comprise any shape. The elongated body can, for example, comprise a cylinder shape, a rectangular prism shape, a cuboid shape or an irregular shape that is in an elongated form. The first end portion may be understood as an end portion of the first pushrod component. The second end portion may be understood as an opposite end portion of the first pushrod component. The first end portion and the second end portion may be located at opposite ends of the first pushrod component. Similarly, the second pushrod component may have opposite end portions.
The ball joint may be a ball-shaped part which fits into a ball-shaped socket. In an example, the ball-shaped socket may be arranged in the brake unit. The brake unit may comprise or be connected to a pedal feel simulator and/or a hydraulic brake arrangement of the braking system. In particular, the brake unit may comprise a modulation unit or be configured as a modulation unit. In the case of a hydraulic brake arrangement, when the brake pedal is pressed, a hydraulic fluid of the hydraulic brake arrangement can be pushed towards the wheel brakes of the vehicle, thereby pressing the wheel brakes. The brake unit, by means of the pedal feel simulator and/or the hydraulic brake arrangement, can additionally exert a force against the brake pedal through the pushrod. The force provided from the brake unit is opposed to the force applied by the driver onto the brake pedal when pressing the pedal. The force provided by the brake unit can thereby create a pedal feel, wherein the force may become larger the more the brake pedal is pressed.

The flexible plug element may be a plug element capable of being modified in its shape without breaking. In an example, the flexible plug element may be an elastic plug element able to resume its normal shape spontaneously after being stretched or compressed. The "plug element" may be a piece of material fitting tightly into a hole and blocking it up. The "socket element" may be a part of a component, into which another element may fit. In this example, it can be understood that the socket element may be the element, into which the flexible plug element may fit. The wording "non-reversibly engageable" may be understood as non-disengageable or non-releasable (at least destruction-free). In other words, the flexible plug element may be engageable with the socket element but not disengageable with the socket element, that is, the flexible plug element may be connectable to the socket element but not releasable from the socket element without damaging or destroying the plug element, the socket element or both.

Being compressible may mean being able to be pressed into a smaller form. Being expandable may mean being able to increase in size. Therefore, it can be understood that the flexible plug element can be smaller when receiving pressure and larger when decompressed, that is, when the pressure or, in other words, a pressure force is gone. Being expandable to its original form can be understood as recovering substantially to its original form.

According to an example, the flexible plug element may be compressible under pressure given by inserting the flexible plug element into the socket element in a first direction along a longitudinal axis of the elongated body. The flexible plug element may be substantially incompressible under pressure given by pulling the flexible plug element out of the socket element in a second direction along the longitudinal axis. The second direction may be opposite to the first direction. The first direction may be a direction along the longitudinal axis from the first end portion of the first pushrod component to the second end portion of the first pushrod component. The second direction may be a direction along the longitudinal axis from the second end portion of the first pushrod component to the first end portion of the first pushrod component. The wording "pulling out" may be understood as applying a force in a direction of pulling out, not as that the flexible plug element is physically being pulled out. Accordingly, it may be hard or impossible to pull the flexible plug element out (at least without damage or destruction), as the flexible plug element may be not compressible when the force is applied in the direction of pulling out.

According to an example, the flexible plug element may be arranged along at least a part of a perimeter of the elongated body. The perimeter may be a continuous line forming a boundary of a closed geometrical figure. For example, if the elongated body has a cylinder shape, the perimeter may be a circumference of the elongated body.

According to an example, the second end portion may comprise a cavity and the flexible plug element may be accommodatable or storable in the cavity. The cavity may be an empty space within a solid portion of the second pushrod component. In this example, the cavity may be understood as an empty space within the second end portion of the first pushrod component. As explained above, the flexible plug element is compressible under pressure. In an example, the flexible plug element may comprise a rigid portion and an elastic portion. The rigid portion may be a portion unable to bend or be forced out of shape. The rigid portion may be understood as a non-flexible portion. The elastic portion may be a flexible portion and/or an adaptable portion. The wording "elastic" may mean being able to resume its normal shape spontaneously after being stretched or compressed. For example, the elastic portion may be a spring. The flexible plug element may be compressible, as the elastic portion of the flexible plug element may be compressible. In an example, the elastic portion may be arranged in the cavity. The elastic portion may therefore not be visible from outside. When the flexible plug element is under pressure, the elastic portion may be compressed and reduced in its size. The rigid portion can then enter the cavity at least in part. The cavity may be configured such that the flexible plug element may be completely accommodated in the cavity when being compressed. In another example, the flexible plug element may have a structure that is compressible only in a certain direction and substantially incompressible in a different direction. The flexible plug element may be out of a rigid material and nevertheless compressible due to the structure. For example, the flexible plug element may be compressible in a vertical direction perpendicular to the longitudinal axis of the elongated body and substantially incompressible in a direction parallel to the longitudinal axis. The flexible plug element may therefore be reduced in its size, when being compressed. For this purpose, for example, the flexible plug element may comprise one or more structural weaknesses. The structural weaknesses may in particular be effective in the vertical direction to allow the compression of the flexible plug element but not be effective in the direction parallel to the longitudinal axis. This means that a force acting on the flexible plug element in the parallel direction would not compress the flexible plug element in the vertical direction. Non-limiting examples of such structural weaknesses are notches or recesses. Specifically, the flexible plug element may comprise at least one structural weakness in the form of a notch and/or a recess. Also, the flexible plug element may comprise several structural weaknesses, which may be spaced apart from one another in a circumferential extension of the flexible plug element. Alternatively, the structural weakness may be at least partially or substantially in full extend along the circumferential extension of the flexible plug element. Accordingly, when the second end portion comprises a cavity to accommodate or store the flexible plug element, a total volume of the second end portion may be even more reduced by compressing the flexible plug element and storing the flexible plug element in the cavity of the second end portion.

According to an example, a dimension of the flexible plug element may be tapered along a longitudinal axis of the elongated body in a direction from the first end portion to the second end portion. The dimension may mean a width or a diameter. The wording "tapered" may mean reduced in thickness towards one end or gradually lessoned. The dimension of the flexible plug element may be tapered at a constant angle or forming a curvature. For example, the flexible plug element may be tapered at a constant angle, that is, the flexible plug element may be in a form creating a constant slope. However, the present invention is not limited thereto. The flexible plug element may form a curvature. The direction from the first end portion to the second end portion may be the first direction explained above. The flexible plug element may in particular be designed as a skirt or apron. The skirt or apron can at least partially or fully circumferentially extend around the longitudinal axis of the elongated body and/or on the elongated body. The skirt or apron may comprise slits extending along the elongated body and dividing the skirt or apron into different segments on the elongated body. The skirt or apron may comprise the form of a cone or truncated cone on the elongated body.

According to an example, the second end portion may further comprise a fastener element engageable with a receptacle element of the second pushrod component. The fastener element may be an element that fastens or attaches to some other element. In this example, the fastener element may be an element that fastens or secures the second end portion inside or with respect to the receptacle element. The receptacle element may comprise a receptacle for receiving the corresponding fastener element. For example, the fastener element may be a screw or bolt element with outer threads and the receptacle element may be a nut or a threaded sleeve with inner threads to interlock with the outer threads.

According to an example, the second end portion may comprise a limit stop element to abut a wall segment of the receptacle element, and the limit stop element may be arranged between the flexible plug element and the fastener element. The limit stop element may mean an element to stop movement when reaching a limit. The wording "abut" may mean touch, lean on, be next to or to have a common boundary with. The wall segment may be a vertical structure that divides or encloses something. The wall segment of the receptacle element may be understood as the vertical structure defining a part of a boundary of the receptacle element.

According to a second aspect, there is provided a second pushrod component comprising an elongated body with a first end portion and a second end portion opposite to the first end portion, wherein the first end portion comprises a ball joint connectable to a brake pedal, and the second end portion comprises a socket element non-reversibly engageable with a flexible plug element of a first pushrod component, wherein the socket element comprises an opening segment for non-reversibly inserting the flexible plug element therethrough in a first direction along a longitudinal axis of the elongated body and a retaining segment for retaining the flexible plug element inside the socket element against pulling the flexible plug element out of the socket element in a second direction along the longitudinal axis being opposite to the first direction.

The elongated body of the second pushrod component may be understood in a corresponding way as the elongated body of the first pushrod component. The first end portion, the second end portion and the ball joint of the second pushrod component may be understood in a corresponding way to the first end portion and the second end portion of the first pushrod component. The opening segment may comprise an opening or a hole for inserting the flexible plug element. The retaining segment may be configured to retain the flexible plug element inside the socket element against pulling the flexible plug element out of the socket element.

The brake pedal may be a pedal that operates a braking mechanism or, in other words, the brake pedal may be a pedal that the driver presses in order to make the vehicle go slower or stop. The first direction may be same as the first direction explained above in connection with the first pushrod component. Retaining the flexible plug element may be understood as preventing disengaging of the flexible plug element. In this way, the second pushrod component can provide a secure engagement or a secure joint of the pushrod.

The socket element may be configured to secure or attach thereto at least a part of the elongated body of the first pushrod component. Securing or attaching at least the part of the elongated body may be understood as firmly gripping the at least the part of the elongated body. The opening segment may be arranged perpendicular to the longitudinal axis. An opening or a hole of the opening segment may be in a size which fits the elongated body of the first pushrod component. The opening or the hole can therefore hold the elongated body of the first pushrod component. In this way, the second pushrod component can maintain the engagement of the pushrod in another way. Even in the very unlikely case that the flexible plug element somehow went out from the socket element, the engagement of the first pushrod component and the second pushrod component would not become loose, since there may be a grip provided between the socket element and the elongated body. A point of the securing or attaching of the elongated body may be understood as to be arranged further from the flexible plug element to the end of the second end portion of the first pushrod component. It can also be understood that the engagement point is arranged between the flexible plug element and the fastener element.

According to an example, the second end portion may further comprise an internal cavity segment surrounded by the opening segment and the retaining segment, the internal cavity segment may have a larger width than the opening segment and the internal cavity segment may be connected to the opening segment, wherein the retaining segment may comprise a wall extending transversely, in particular perpendicular, to the longitudinal axis for retaining the flexible plug element. The internal cavity segment may have a larger width than the opening segment. The width may be understood as a diameter or a dimension of extension perpendicular to the longitudinal axis. The internal cavity segment may be connected to the opening segment. Furthermore, the retaining segment may comprise a wall extending perpendicular to the longitudinal axis for retaining the flexible plug element.

According to an example, the opening segment may comprise a chamfered end at an outer edge of the opening segment, wherein the chamfered end may be arranged at at least a part of the opening segment. The chamfered end may be understood as an end that is cut in part to make a sloping edge. The chamfered end at the outer edge of the opening segment may be understood as an outer end of the opening segment that is chamfered. The outer edge or the outer end may be located opposite to a side of the internal cavity segment. The chamfered end may provide an easier inserting of the first pushrod component and thereby providing an easier engaging of the first pushrod component and the second pushrod component.

According to an example, the second end portion may further comprise the receptacle element engageable with the fastener element of the first pushrod component. The receptacle element and the fastener element according to this example may be understood to be same as the receptacle element and the fastener element in the previous examples.

According to an example, the second end portion may comprise a limit stop element to abut a wall segment of the flexible plug element, and the limit stop element may be arranged between the socket element and the receptacle element. The limit stop element of the second pushrod component may be understood in a corresponding way as the limit stop element of the first pushrod component.

According to a third aspect, there is provided a set comprising the first pushrod component according to the first aspect and the second pushrod component according to the second aspect.

According to a fourth aspect, there is provided a pushrod comprising the first pushrod component according to the first aspect and the second pushrod component according to the second aspect, the flexible plug element of the second end portion of the first pushrod component being non-reversibly engaged with the socket element of the second end portion of the second pushrod component.

According to a fifth aspect, there is provided a vehicle comprising a braking system with the pushrod according to the fourth aspect.

It should be noted that the above examples may be combined with each other irrespective of the aspect involved. Accordingly, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure, which are presented for better understanding of the invention, but not to be seen as limiting the invention, will be described in the following with reference to the following drawings.
- Figure 1: shows a cross-sectional view of a part of a braking system comprising a pushrod.
- Figure 2a: shows a top view of a first pushrod component of the pushrod of Fig. 1.
- Figure 2b: shows a top view of an alternative first pushrod component of the pushrod of Fig. 1.
- Figure 2c: shows a cross-sectional view of a flexible plug element of the first pushrod component of Fig. 2b or 2c.
- Figure 3a: shows a top view of a second pushrod component of the pushrod of Fig. 1.
- Figure 3b: shows a perspective view of a socket element of the second pushrod component of Fig. 3a.
- Figure 4: shows a cross-sectional view of respective end portions of the first pushrod component of Fig. 2a and the second pushrod component of Fig. 3a engaged with each other.
- Figures 5a, 5b and 5c: show cross-sectional views of a sequence of engagement of the first pushrod component and the second pushrod component as shown in Fig. 4

### DETAILED DESCRIPTION OF DRAWINGS

The Figures are merely schematic representations and serve only to illustrate examples of the disclosure. Identical or equivalent elements are in principle provided with the same reference signs.

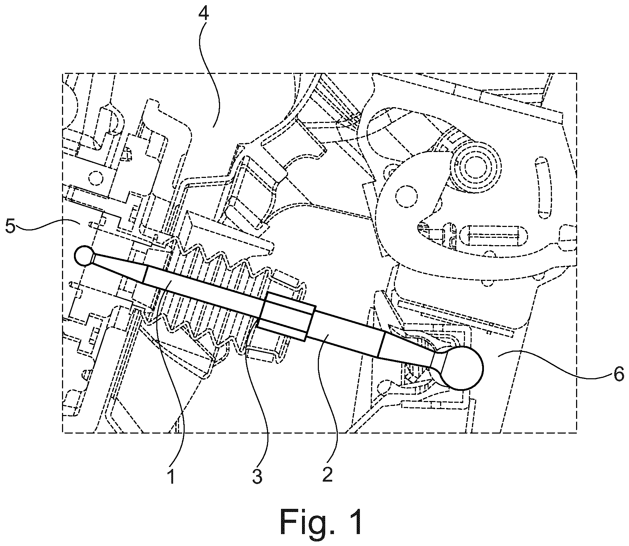

Figure 1 shows a cross-sectional view of a part of a braking system 4 comprising a pushrod 3. The braking system 4 may comprise a brake unit 5 and a brake pedal 6. The brake unit 5 and the brake pedal 6 may be connected via the pushrod 3. The pushrod 3 may comprise the first pushrod component 1 and the second pushrod component 2. The first pushrod component 1 may be arranged at or connected to the brake unit 5. The second pushrod component 2 is another part of the pushrod 3. The second pushrod component 2 may be arranged at or connected to the brake pedal 6. However, the present invention is not limited thereto and the first pushrod component 1 may be arranged at or connected to the brake pedal 6 and the second pushrod component 2 may be arranged at or connected to the brake unit 5.

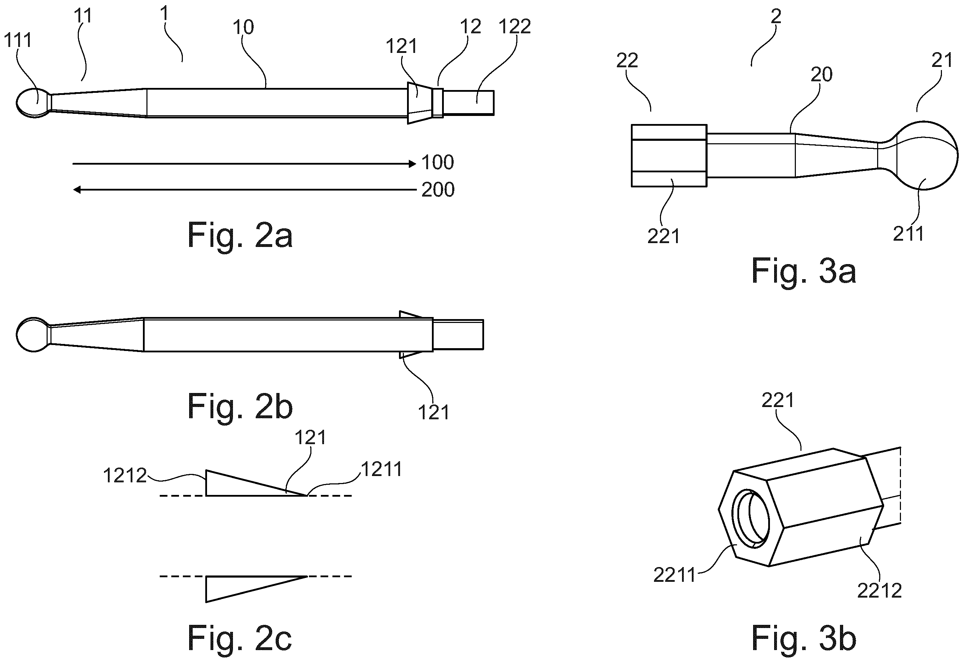

Figure 2a shows a top view of a first pushrod component 1 of the pushrod 3 of Fig. 1. The first pushrod component 1 comprises the elongated body 10 with a first end portion 11 and a second end portion 12. The first end portion 11 comprises a ball joint 111, which is connectable to the brake unit 5. The second end portion 12 comprises the flexible plug element 121, which is non-reversibly engageable with the socket element 221 of a second pushrod component 2 as exemplary shown in Figure 3a.

The non-reversible engagement of the flexible plug element 121 and the socket element 221 can be achieved by the flexible plug element 121, which is compressible under pressure and expandable to its original form when decompressed. Since the flexible plug element 121 can be compressed and recover its original form, it is possible to engage the flexible plug element 121 through an opening or a hole that is smaller than the largest size of the unstretched and/or unexpanded flexible plug element 121. The size may refer to a width and/or a diameter. By being compressible and expandable, the socket element 221 which is to be engaged with the flexible plug element 121 does not need to have an opening or a hole which is at least as large as the flexible plug element 121. It is possible to engage the flexible plug element 121 with the socket element 221 having a smaller opening or hole. Furthermore, it may be possible to achieve a strong engagement between the flexible plug element 121 with the socket element 221, since the flexible plug element 121 is expandable to its original form when the smaller opening or hole is passed. Therefore, even if the socket element 221 has the smaller opening or hole, the flexible plug element 121 may still be able to achieve a strong engagement with the socket element 221 by recovering its original form.

The flexible plug element 121 may be compressible under pressure given by inserting the flexible plug element 121 into the socket element 221 in the first direction 100 along a longitudinal axis of the elongated body 10 and substantially incompressible under pressure given by pulling the flexible plug element 121 out of the socket element in the second direction 200 along the longitudinal axis, the second direction being opposite to the first direction. Depending on the shape of the flexible plug element 121, the pressure given by inserting the flexible plug element 121 into the socket element 221 in the first direction 100 may vary. For example, if the flexible plug element 121 is tapered as illustrated in Figure 2a, the pressure given by inserting the flexible plug element 121 in the first direction 100 may be substantially perpendicular to the surface of the flexible plug element 121 being pressed when being inserted into the socket element 221. The flexible plug element 121 would be compressible under such pressure. Being substantially incompressible may be understood as being incompressible. In other words, the flexible plug element 121 may be incompressible under pressure given by pulling the flexible plug element 121 out of the socket element 221.

Figure 2b shows a top view of an alternative first pushrod component 1 of the pushrod 3 of Fig. 1. The flexible plug element 121 may be arranged along at least a part of a perimeter of the elongated body 10. While Figure 2a shows an example of the flexible plug element 121 surrounding the elongated body 10, another example, as in Figure 2b, shows that the flexible plug element 121 may be arranged only at a part of the perimeter of the elongated body 10. The flexible plug element 121 may comprise a plurality of flexible plug element components. The plurality of flexible plug element components may be located along the perimeter with gaps in between. For example, in the top view of the alternative first pushrod component 1 shown in Figure 2b, the flexible plug element 121 is illustrated in two independent and separate flexible plug element components, which form the flexible plug element 121 together. Thereby, the pushrod 3 can be manufactured with less weight and the flexible plug element 121 can be provided with more flexibility to easily fit into the socket element 221 without, however, becoming disengageable. Furthermore, when the flexible plug element 121 comprises the plurality of flexible plug element components, it may be advantageous in case one of the flexible plug element component gets broken or deformed, since there would be at least another flexible plug element component which can still function as the flexible plug component 121.

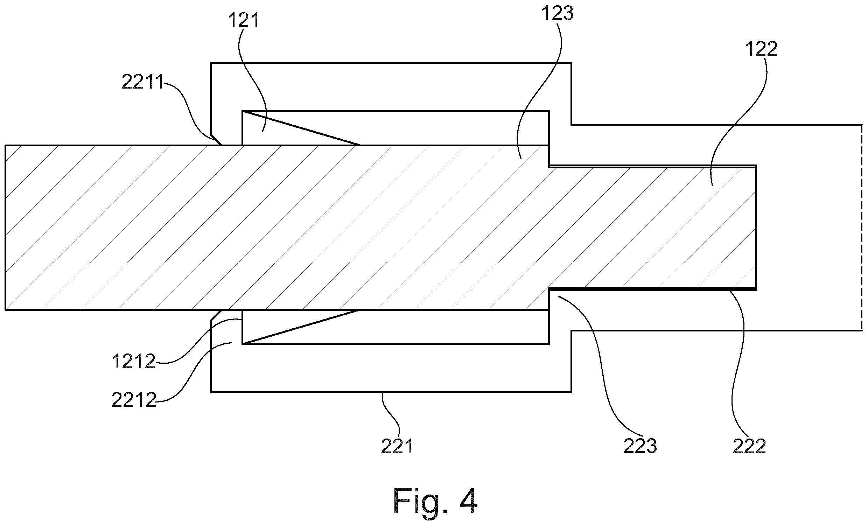

Figure 2c shows a cross-sectional view of the flexible plug element 121. In an example, a dimension of the flexible plug element 121 may be tapered along a longitudinal axis of the elongated body 10 in a direction from the first end portion 11 to the second end portion 12. In other words, it may be understood that the flexible plug element 121 may comprise an introducing side 1211 and a locking side 1212 opposite to the introducing side 1211, wherein the introducing side 1211 enters the socket element of the second pushrod element 2 before the locking side 1212, when the first pushrod element 1 is being engaged with the second pushrod element 2, wherein a dimension of the flexible plug element 121 gradually increases from the introducing side 1211 to the locking side 1212, thereby creating a tapered effect. For example, in an example illustrated in Figure 2c, the locking side 1212 may be the left side of the flexible plug element 121 perpendicular to the longitudinal axis. When it is tried to pull the flexible plug element 121 out of the socket element 221 in the second direction 200, a counterforce may be applied to the locking side 1212 of the flexible plug element 121 by a wall of the socket element 221. The wall of the socket element 221 may be a part of a retaining segment 2212 of the socket element 221, as shown in Figure 3b and 4. In other words, the counterforce may be applied at the locking side 1212 of the flexible plug element 121 by the force applied in the second direction. When such force to pull the flexible plug element 121 out is given, the counterforce would be applied at the locking side 1212 and the flexible plug element 121 would be non-disengageable, since the locking side 1212 of the flexible plug element 121 may have a larger dimension than the introducing side 1211 due to the tapered shape of the flexible plug element 121.

Figure 3a shows a top view of the second pushrod component 2. The second pushrod component 2 comprises the elongated body 20 with the first end portion 21 and the second end portion 22 opposite to the first end portion 21. The first end portion 21 comprises the ball joint 221, which is connectable to the brake pedal 6. The second end portion 22 comprises a socket element 221, which is non-reversibly engageable with the flexible plug element 121 of the first pushrod component 1. It is noted that the elongated body 20 of the second pushrod component 2 does not refer to the elongated body 10 of the first pushrod component 1. Similarly, the first end portion 21 of the second pushrod component 2 does not refer to the first end portion 11 of the first pushrod component 1. The second end portion 22 of the second pushrod component 2 does not refer to the second end portion 12 of the first pushrod component 1 either.

Figure 3b shows a perspective view of the socket element 221 of the second pushrod component 2. The socket element 221 may further comprise an opening segment 2211 for non-reversibly inserting the flexible plug element 121 therethrough in the first direction 100 along the longitudinal axis of the elongated body 20. The socket element 221 may further comprise a retaining segment 2212 for retaining the flexible plug element 121 inside the socket element 221 against pulling the flexible plug element 121 out of the socket element 221 in the second direction 200 along the longitudinal axis being opposite to the first direction 100. Further details of the retaining segment 2212 are given in connection with Figure 4 as below.

Figure 4 shows a cross-sectional view of respective end portions of the first pushrod component 1 and the second pushrod component 2 engaged with each other according to an example of the present invention. Details of the second end component 12 of the first pushrod component 1 and the second end portion 22 of the second pushrod component 2 are shown therein.

Referring mainly to the first pushrod component 1, Figure 4 shows the flexible plug element 121 and the fastener element 122 of the second end portion 12 of the first pushrod component 1. The second end portion 12 may further comprise the limit stop element 123 to abut a wall segment of the receptacle element 222. The limit stop element 123 may be arranged between the flexible plug element 121 and the fastener element 112. The limit stop element 123 may be in a form of a step.

Referring mainly to the second pushrod component 2, Figure 4 shows the socket element 221 and the receptacle element 222 of the second end portion 22 of the second pushrod component 2. The second end portion 22 may further comprise the limit stop element 223 to abut a wall segment of the second end portion 12 of the first pushrod component 1. The limit stop element 223 may be arranged between the socket element 221 and the receptacle element 222. The limit stop element 223 may be in a form of a step. The form of the limit stop element 223 of the second pushrod component 2 and the form of the limit stop element 123 of the first pushrod component 1 may be complementary.

Figure 4 shows further details of the engagement of the flexible plug element 121 and the socket element 221. The retaining segment 2212 may retain the flexible plug element 121 inside the socket element 221 by applying a counterforce to the flexible plug element 121 when a force for pulling the flexible plug element 121 out of the socket element 221 is applied in the second direction 200. Accordingly, the retaining segment 2212 may apply the counterforce to the flexible plug element 121 in the first direction 100. More specifically, the locking side 1212 of the flexible plug element 121 may receive the counterforce from the retaining segment 2212 in the first direction 100. Therefore, it may not be possible to pull the flexible plug element 121 out of the socket element 221 without braking or deforming the flexible plug element 121 once engaged.

As further shown in Figure 4, the second end portion 22 may further comprise an internal cavity segment surrounded by the opening segment 2211 and the retaining segment 2212. In an example, the opening segment 2211 may comprise the chamfered end at an outer edge of the opening segment 2211, wherein the chamfered end is arranged at at least a part of the opening segment 2211.

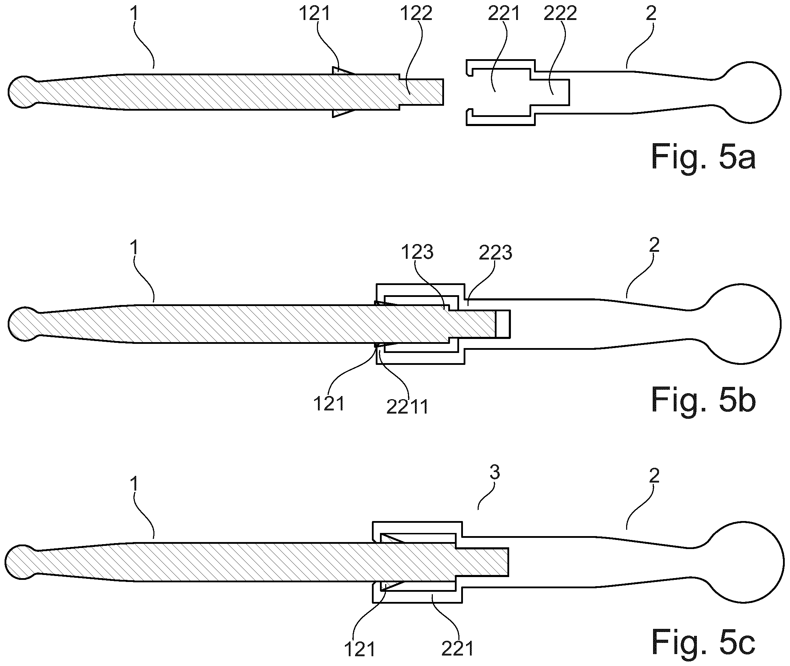

Figures 5a, 5b and 5c show cross-sectional views of a sequence of engagement of the first pushrod component 1 and the second pushrod component 2. From Figure 5a to Figure 5b and from Figure 5b to Figure 5c, it is shown that the first pushrod element 1 is moving in the first direction toward the second pushrod element 2. Accordingly, it may be understood that the second direction is from Figure 5c to Figure 5b and Figure 5b to Figure 5a.

When the first pushrod component 1 and the second pushrod component 2 are being engaged, the second end portion 12 of the first pushrod component 1 enters the second end portion 22 of the second pushrod component 2. When the flexible plug element 121 is being inserted into the socket element 221, the flexible plug element 121 may be compressed to enter the opening segment 2211, see Figure 5b. Once the flexible plug element 121 has passed the opening segment 2211, there would be no pressure applied to the flexible plug element 121 to compress the flexible plug element 121. Accordingly, the flexible plug element would be expanded to its original form after passing the opening segment 2211. Since the flexible plug element 121 is expanded to its original form in the socket element 221, a secure engagement can be achieved, since the flexible plug element 121 is substantially incompressible under pressure given by pulling the flexible plug element 121 out of the socket element 221.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: first pushrod component
- 10: elongated body of the first pushrod component
- 11: first end portion of the first pushrod component
- 111: ball joint of the first pushrod component
- 12: second end portion of the first pushrod component
- 121: flexible plug element
- 1211: introducing side
- 1212: locking side
- 122: fastener element
- 123: limit stop element of the first pushrod component
- 2: second pushrod component
- 20: elongated body of the second pushrod component
- 21: first end portion of the second pushrod component
- 211: ball joint of the second pushrod component
- 22: second end portion of the second pushrod component
- 221: socket element
- 2211: opening segment
- 2212: retaining segment
- 222: receptacle element
- 223: limit stop element of the second pushrod component
- 3: pushrod
- 4: braking system
- 5: brake unit
- 6: brake pedal
- 100: first direction
- 200: second direction

## Claims

1. A first pushrod component (1) comprising an elongated body (10) with a first end portion (11) and a second end portion (12) opposite to the first end portion (11), wherein
the first end portion (11) comprises a ball joint (111) connectable to a brake unit (5) and/or a brake pedal (6), and
the second end portion (12) comprises a flexible plug element (121) non-reversibly engageable with a socket element (221) of a second pushrod component (2), wherein
the flexible plug element (121) is compressible under pressure and expandable to its original form when decompressed.

2. The first pushrod component (1) according to claim 1, wherein the flexible plug element (121) is compressible under pressure given by inserting the flexible plug element (121) into the socket element (221) in a first direction (100) along a longitudinal axis of the elongated body (10) and substantially incompressible under pressure given by pulling the flexible plug element (121) out of the socket element (221) in a second direction (200) along the longitudinal axis, the second direction being opposite to the first direction.

3. The first pushrod component (1) according to claim 1 or 2, wherein the flexible plug element (121) is arranged along at least a part of a perimeter of the elongated body (10).

4. The first pushrod component (1) according to any one of the previous claims, wherein the second end portion (12) comprises a cavity and the flexible plug element (121) is accommodatable in the cavity.

5. The first pushrod component according to any one of the previous claims, wherein a dimension of the flexible plug element (121) is tapered along a longitudinal axis of the elongated body (10) in a direction from the first end portion (11) to the second end portion (12).

6. The first pushrod component according to any one of the previous claims, wherein the second end portion (12) further comprises a fastener element (122) engageable with a receptacle element (222) of the second pushrod component (2).

7. The first pushrod component (1) according to claim 6, wherein the second end portion (12) comprises a limit stop element (123) to abut a wall segment of the receptacle element (222), the limit stop element (123) being arranged between the flexible plug element (121) and the fastener element (122).

8. A second pushrod component (2) comprising an elongated body (20) with a first end portion (21) and a second end portion (22) opposite to the first end portion (21), wherein
the first end portion (21) comprises a ball joint (211) connectable to a brake pedal (6) and/or a brake unit (5), and
the second end portion (22) comprises a socket element (221) non-reversibly engageable with a flexible plug element (121) of a first pushrod component (1), wherein
the socket element (221) comprises an opening segment (2211) for non-reversibly inserting the flexible plug element (121) therethrough in a first direction (100) along a longitudinal axis of the elongated body (20) and a retaining segment (2212) for retaining the flexible plug element (121) inside the socket element (221) against pulling the flexible plug element (121) out of the socket element (221) in a second direction (200) along the longitudinal axis being opposite to the first direction.

9. The second pushrod component (2) according to claim 8, wherein the second end portion (22) further comprises an internal cavity segment (223) surrounded by the opening segment (2211) and the retaining segment (2212), the internal cavity segment (223) having a larger width than the opening segment (2211) and the internal cavity segment (223) being connected to the opening segment (2211), wherein the retaining segment (2212) comprises a wall extending transversely to the longitudinal axis for retaining the flexible plug element (121).

10. The second pushrod component (2) according to claim 8 or 9, wherein the opening segment (2211) comprises a chamfered end at an outer edge of the opening segment (2211), wherein the chamfered end is arranged at at least a part of the opening segment (2211).

11. The second pushrod component (2) according to any one of claims 8 to 10, wherein the second end portion (22) further comprises a receptacle element (222) engageable with a fastener element (122) of the first pushrod component (1).

12. The second pushrod component (2) according to any one of claims 8 to 11, wherein the second end portion (22) comprises a limit stop element (223) to abut a wall segment of a second end portion (12) of the first pushrod component (1), the limit stop element (223) being arranged between the socket element (221) and the receptacle element (222).

13. A set comprising a first pushrod component (1) according to any one of claims 1 to 7 and a second pushrod component (2) according to any one of claims 8 to 12.

14. A pushrod (3) comprising a first pushrod component (1) according to any one of claims 1 to 7 and a second pushrod component (2) according to any one of claims 8 to 12, the flexible plug element (121) of the second end portion (12) of the first pushrod component (1) being non-reversibly engaged with the socket element (221) of the second end portion (22) of the second pushrod component (2).

15. A vehicle comprising a braking system (4) with a pushrod (3) according to claim 14.
